# EUROPEAN PATENT SPECIFICATION

(11) **EP 0 673 569 B1**
(45) Date of publication and mention of the grant of the patent: **26.02.2003**
(21) Application number: 94902147.1
(22) Date of filing: 04.11.1993
(51) Int. Cl.: H04B 7/155, H04B 7/212, H04B 7/26

(54) **ARRANGEMENT FOR A SHORT-RANGE RADIO SYSTEM**
EINRICHTUNG FÜR FUNKSYSTEM MIT KURZER REICHWEITE
DISPOSITIF POUR SYSTEME RADIO DE COURTE PORTEE

(30) Priority: 11.12.1992 SE 9203723
(43) Date of publication of application: 27.09.1995
(73) Proprietor: TELIA AB, 123 86 Farsta (SE)
(72) Inventor: WICKMAN, Johan, S-237 00 Bjärred (SE)
(74) Representative: Akerman, Marten Lennart
(86) International application number: SE9300919
(87) International publication number: WO94014250

(56) References cited:
- EP-A- 0 092 237
- EP-A- 0 210 811
- EP-A- 0 415 810
- WO-A-89/10660
- WO-A-94/01941
- PATENT ABSTRACTS OF JAPAN, Vol. 14, no. 41, E-879; & JP,A,01 273 443 (SONY CORP), 1 November 1989 (01.11.89).

## Description

### TECHNICAL FIELD

The present invention relates to an arrangement for extending the range in a digital mobile radio communications system comprising, on the one hand, closely placed base stations and operating with a short range and, on the other hand, mobile units, by means of repeating functions.

### PRIOR ART

In radio systems, preferably digital radio systems, which are used in local applications, the coverage between a base station included in the system and a mobile unit belonging to the base station is limited to the range of coverage of the base stations. It has previously been known through patent specification EP-A2-0092237 to utilize repeating functions in general public radio relay systems. The repeating functions repeat a first sequence of descending time slots in a first time frame from the first to the second station as a second sequence of descending time slots in a second time frame. Furthermore, the repeater functions transmit a first sequence of ascending time slots to the first station which corresponds to a second sequence of ascending time slots received from the second station.

A radio repeater is also known from the international patent application WO-A1-8910660, for use in a frequency band having a plurality of RF channels for carrying a plurality of digital TDMA channels, each having a sequence of time slots. Said raio repeater comprises a plurality of single RF-channel amplifier units, and control means for scanning the RF channels to indentify an active RF channel and for assigning one of the amplifier units to an identified active channel. Each of the amplifier units has means for identifying an active time slot of a TDMA channel, within an RF channel, and for amplifying that time slot.

In connection with an associated mobile radio system with poor range in relation to the mean length of the radio link, a number of methods for improving the coverage between the mobile units and the base stations has been proposed. However, the published proposals have entailed drawbacks with delays of the voice or data connections. No known technique for improving the range between mobile units and a base station in a local network which provides high capacity, adequate range, reliability and, respectively, quality has previously been found.

### DESCRIPTION OF THE INVENTION

### TECHNICAL PROBLEM

Today's modern local radio systems presuppose the greatest possible range between the transmitters and receivers of the base stations and the mobile units, at the same time as the greatest possible consideration can be paid to the radio systems being allocated to operate at a high frequency band, preferably above 100 MHz, which provides a poor range with respect to a median attenuation of the radio link. Inversely, a small part of the radio link has very high attenuation. To obtain adequate signal strength, the low-attenuation link must therefore be considerably shortened since the high-attenuation link cannot be changed for application reasons.

The problem can be exemplified by the radio-based local network application OMA (limited-range mobile access). The application involves that the terminated wire connection to the subscriber is replaced by radio. The telephone exchange is connected to a radio base at a suitable distance from the subscriber, for example 500 metres. The radio base can connect a large number of subscribers within the coverage area. The subscriber whose normal wire-connected telephone is replaced by one or more wireless telephones is offered a mobility of limited range. That way costs for maintenance and cable laying can be minimized. However, this presupposes that an adequate range can be obtained. An ongoing test activity has shown that this type of system provides OMA ranges of less than 100 metres. An explanation for the relatively low range is that the signal strength is highly attenuated when the radio waves have to penetrate the building or terrain. The invention is intended to be able to solve this problem among others.

In an embodiment of the object of the invention, the application of a time-division multiplex protocol is utilized, in which it will be possible for the message to be transmitted in time slots divided into time frames in such a manner that no drawbacks with delays of voice or data connections arise. The invention also intends to solve this problem.

In an embodiment of the object of the invention, an influencing function is used in which influencing function it will be possible to allocate time slots in such a manner that the capacity is increased in the critical coverage area of the mobile system. The invention also intends to solve this problem.

In an embodiment of the object of the invention, the repeating functions select which time slots can be selected for the transmission in which they are engaged. It should be possible to do this in such a manner that the mobile unit or base station can establish direct connections. The invention also intends to solve this problem.

In an embodiment of the object of the invention, the radio-based communications system operates within an allocated frequency band, this frequency band will be applied in such a manner that it is suitable for local outdoor/indoor communication. The invention also intends to solve this problem.

In an embodiment of the object of the invention, the effects of the radio communications system are utilized, in which effects it should be possible to control the traffic over the repeating functions in a favourable and flexible manner for the system. The invention also intends to solve this problem.

In an embodiment of the object of the invention, the transmission of the message in time slots assembled into time frames is utilized. It should be possible to carry out this transmission in such a manner that the quality of voice or data connections is not impaired. The invention also intends to solve this problem.

In an embodiment of the object of the invention, the said repeating function is connected between respective base station and respective mobile units, in which connection it should be possible to avoid laying cables to base stations. The invention also intends to solve this problem.

### SOLUTION

According to the invention, a digital radio-based communications system is provided, operating with a short range, such as DECT. Said system comprises closely placed base stations and has at least one repeating station for extending the range of the system, placed between an ordinary base station and a mobile unit. The repeating station is devised to receive a respective message and forward the message to the mobile unit. The digital radio-based communications system is arranged to transmit the message in time slots, which are subdivisions of time frames, whereby selected time slots in a respective time frame are allocated for transmitting the said message to or respectively from a said repeating station. Characterising for the invention is that the repeating station is a simplified variant of a base station, and that the repeating station is arranged to influence the said allocation of time slots in dependence on the required capacity in the area, in which the said repeating station is located.

In an embodiment of the concept of the invention, the said repeating function of the message is arranged in a digital radio system which operates in accordance with a time-division multiplex protocol which utilizes the frame structure in the TDMA/TDD method.

In a further embodiment of the concept of the invention, the digital radio-based communications system is arranged with time frames divided into a number of time slots, where half the time slots are used for signalling in the network link. The other half is utilized for the uplink. There, certain selected time slots in the respective time frame are allocated for transmission of the said message to and respectively from the said repeating function.

In a further embodiment of the concept of the invention, the repeating function is arranged to influence the number of time slots per link in order to increase the capacity within a critical range in the coverage area of the mobile system.

In a further embodiment of the concept of the invention, the message which is transmitted in the radio-based communications system can be transmitted from a base station/mobile unit to a mobile unit/base station without the said repeating function being called or activated. This means that the repeating function will determine which time slots can be selected for a transmission in which it is engaged.

In a further embodiment of the concept of the invention, the radio-based communications system base stations and mobile units are allocated a frequency, a frequency range, which is suitable for local outdoor or indoor communication (higher than 100 MHz).

In a further embodiment of the concept of the invention, the radio communications system can be influenced for capacity reasons to permit a user or customer to force the system to transmit all messages between a respective ordinary base station and respective mobile unit via the repeating functions during a variable time or continuously.

In a further embodiment of the concept of the invention, the message which has been received by the repeating function is forwarded to a respective affected mobile unit/ordinary base station within the same time frame, but sent to the repeating function.

In a further embodiment, the repeating function is connected wirelessly between an ordinary base station and a mobile unit.

In a further embodiment of the concept of the invention, the said radio communications system is arranged with one or more elements for receiving and respectively transmitting the message. A further characteristic is that the elements are callable from a respective base station/mobile unit and that a respective element for receiving and respectively transmitting of a message is arranged to receive a message from a respective base station/mobile unit. The elements for receiving and respectively transmitting of the message are arranged to transmit the said message to a respective affected (addressed) mobile unit/base station.

### ADVANTAGES

By using what has been proposed above, an effectively radio-based local communications system can be established where a respective mobile unit can flexibly move within a large coverage area, at the same time as it is considered that the communications system is allocated a higher frequency than 100 MHz, which provides a poor range with respect to the median attenuation of the radio link. It should be simpler/more inexpensive to cover greater areas when the range of the digitally based radio system can be greatly increased. Subscribers utilizing mobile units in the system receive greater coverage. The arrangement is especially suitable in applications where the full capacity of the system is not needed. A typical example of this is DECT (Digital European Cordless Telecommunication) in the local network (often called Cordless Local Loop), where the range can sometimes require to be improved and where the covered capacity is much greater than is needed.

### DESCRIPTION OF THE FIGURES

An embodiment, proposed for the present, of an arrangement which exhibits the characteristics significant of the invention will be described below, whilst at the same time referring to the attached drawings, in which
Figure 1 shows a preferred embodiment of the invention in block diagram form,
Figure 2 shows a time frame structure for transmitting the message in a TDMA system in block diagram form.

### A FUNCTIONING EMBODIMENT

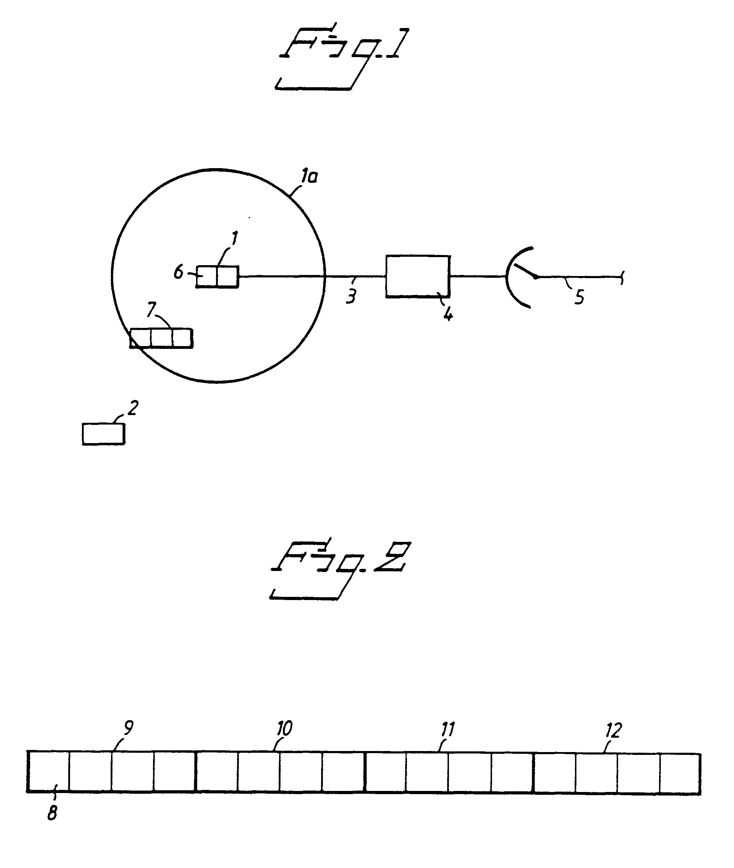

Figure 1 shows a mobile telecommunications system comprising, on the one hand, a number of base stations operating with coverage areas here given as 1, the coverage areas being given as 1a, and, on the other hand, one or more mobile units, one of which is given by 2 in this case. The mobile communications system operates with frequencies above 100 MHz and has therefore a poor range in relation to the median damping of the radio link. A large proportion of the radio link has low damping. Inversely, a small proportion of the radio link has a very high damping. The mobile communications system can be made up of a system known per se, operating with a TDMA structure, for example DECT, DCS 1800 and DCT 900. The system which is shown in the Figure is a typical DECT (Digital European Cordless Telecommunication in a local network) system (often called Cordless Local Loop), where the range can sometimes need to be improved and where the DECT capacity is much greater than is needed. The base station 1 shown in the Figure is connected to a telephone exchange 4 via an exchange line connection. The telephone exchange 4 is a subscriber exchange (often called PABX) connected to a public telephone network 5. Numbers calls to a mobile unit 2 sought in the system come in via the public telephone network 5 and are connected to the telephone exchange 4. From the telephone exchange 4, a search call goes to the base station 1 via the exchange line connection 3. The base station 1 is provided with a transmitting and receiving element 6. The information-transmitting and receiving element 6 of the base station 1 sends a call to the sought mobile unit 2. The sought mobile unit 2 is located outside the coverage area 1a of the affected base station 1 and can therefore not directly receive/sense the said call. A repeating function 7 is placed within the coverage area 1a of the affected mobile unit 1 and picks up the said call. The repeating function 7 is in principle a simplified base station 1. The repeating function 7 repeats the call/message which is sent from the base station 1 to the affected mobile unit which is located outside the coverage area 1a of the affected base station 1. The repeating of the call/message occurs within the same time frame within which the affected base station 1 is transmitting the call/message. In the same manner, the repeating function 7 carries out receiving and transmitting of information from the mobile unit 2 forward to the transmitting and receiving function 6 of the affected base station 1. The repeating function 7 does not need to carry out any coding/decoding. The transmission of the repeating function 7 occurs in four parts in one time frame in the following sequence in time: base station 1 to repeating function 7, repeating function 7 to mobile unit 2, mobile unit 2 to repeating function 7, repeating function 7 to base station 1. It is the repeating function 7 which determines which time slots will be selected for a transmission in which it is engaged. This means that it can be possible, for example, for a mobile unit 2 to create a direct connection (without the repeating function 7) to the transmitting and receiving element 6 of the base station 1. The mobile unit 2 and base station 1 do not need to be modified in order to operate with the repeating function, provided that they can monitor and follow the request of the repeating function about which time slots are to be allowed.

For capacity reasons, it can be an advantage also to implement certain software in the mobile unit 2 and respectively base station 1, which allows the user (operator or customer) to force (possibly temporarily) the system to utilize the repeating function 7. The result is that calls in forbidden time slots are prevented. If no extra software is installed in the mobile unit 2 and respectively base station 1, the repeating function 7 is forced to signal the calling mobile unit 2 or base station 1 that another time slot will be used. The use of time slots in time frames by the repeating function 7 increases the range of the system at the cost of a reduced total capacity in the network. This is particularly of interest with the introduction of new systems (for example DCS 1800, DECT, etc) where one of the initial problems is to obtain adequate range.

Figure 2 shows a preferred TDMA time frame. The number of time slots 8 has been selected as 16 (DCT 900). The time frame is divided into four units, 9, 10, 11 and 12. Each part of the time frame 9, 10, 11 and 12 contains four time slots 8 in each case. The first part of the time frame 9 is used for transmitting information/messages from the base station to the repeating function. The second part of the time frame 10 is used for transmitting information/messages from the repeating function to the mobile unit. The third part of the time frame 11 is used for transmitting information from the mobile unit to the repeating function. The fourth part of the time frame 12 is used for transmitting information from the repeating function to the base station. The distribution of the time slots 8 in the frame will always follow the principle in the Figure. However, the number of time slots 8 per part 9, 10, 11 and 12 can be selected differently in order to increase in this manner the capacity in critical parts in the mobile communications system. For radio-based local network applications which are limited in range, the transmission from the base station to the repeating function and respectively from the repeating function to the base station will be the critical part. The TDMA time frame can therefore be divided taking this into account. The number of time slots 8 in the time frame can also be varied, for example the mobile communications system DECT can be mentioned which has 24 time slots.

The invention is not limited to the embodiment shown above by way of example but can undergo modifications within the scope of the subsequent patent claims.

## Claims

1. A digital radio-based communications system operating with a short range, for example DECT, said system comprising closely placed base stations (1) and having a repeating station (7) for extending the range of the system, placed between an ordinary base station (1) and a mobile unit (2), which repeating station receives a respective message and forwards the message to the mobile unit, the said digital radio-based communications system being arranged to transmit the message in time slots (8) which are subdivisions of time frames (9, 10, 11, 12) whereby selected time slots in a respective time frame are allocated for transmitting the said message to or respectively from said repeating station, **characterised in that** the repeating station is a simplified variant of a base station, and **in that** the repeating station is arranged to influence the said allocation of time slots in dependence on the required capacity in the area in which the said repeating station is located.

2. Arrangement according to Claim 1, **characterised in that** the said repeating station of a message is arranged to operate in accordance with a time division multiplex protocol.

3. Arrangement according to any of the preceding claims, **characterised in that** the messages in the radio-based communications system can be transmitted from a base station/mobile unit to a mobile unit/base station without the said repeating station being called or activated.

4. Arrangement according to any of the preceding claims, **characterised in that** the base stations and mobile units of the radio-based communications system operate with higher frequencies than 100 MHz and are intended to be used for local outdoor/indoor communication.

5. Arrangement according to any of the preceding claims, **characterised in that** the radio communications system can be influenced for transmitting all messages between a respective ordinary base station and respective mobile unit via the said repeating station within a variable time or continuously.

6. Arrangement according to any of the preceding claims, **characterised in that** the messages which have been received by the said repeating station are forwarded to a respective affected mobile unit/ordinary base station within the same time frame within which it is transmitted to the said repeating station.

7. Arrangement according to any of the preceding claims, **characterised in that** the said repeating station is wirelessly connected in the said radio communications system.

## Patentansprüche

1. Digitales, auf Funk basierendes Kommunikationssystem, welches mit einer kurzen Reichweite arbeitet, beispielsweise DECT, wobei das System eng platzierte Basisstationen (1) aufweist und eine Wiederholungsstation (7) hat, um die Reichweite des Systems auszuweiten, die zwischen einer gewöhnlichen Basisstation (1) und einer mobilen Einheit (2) plaziert ist, wobei diese Wiederholungsstation eine entsprechende Mitteilung empfängt und die Mitteilung auf die mobile Einheit weiterleitet, wobei das digitale, auf Funk basierende Kommunikationssystem so angeordnet ist, daß es die Mitteilung in Zeitschlitzen (8) überträgt, welche Unterteilungen von Zeitrahmen (9, 10, 11, 12) sind, wodurch gewählte Zeitschlitze in einem entsprechenden Zeitrahmen zum Senden der Mitteilung zur bzw. von der Wiederholungsstation zugeteilt sind,
**dadurch gekennzeichnet, daß** in der Wiederholungsstation eine vereinfachte Variante einer Basisstation ist, und daß die Wiederholungsstation so angeordnet ist, daß sie die Zuteilung der Zeitschlitze in Abhängigkeit von der erforderlichen Kapazität in dem Bereich, in welchem die Wiederholungsstation liegt, beeinflußt.

2. Anordnung nach Anspruch 1,
**dadurch gekennzeichnet, daß** die Wiederholungsstation einer Mitteilung so angeordnet ist, daß sie in Übereinstimmung mit einem Zeitteilungs-Multiplex-Protokoll arbeitet.

3. Anordnung nach einem der vorstehenden Ansprüche,
**dadurch gekennzeichnet, daß** die Mitteilungen in dem auf Funk basierenden Kommunikationssystem von einer Basisstation/mobilen Einheit auf eine mobile Einheit/-Basisstation übertragen werden können, ohne daß die Wiederholungsstation angerufen oder aktiviert wird.

4. Anordnung nach einem der vorstehenden Ansprüche,
**dadurch gekennzeichnet, daß** die Basisstationen und die mobilen Einheiten des auf Funk basierenden Kommunikationssystems mit höheren Frequenzen als 100 MHz arbeiten und für die Verwendung für die lokale Außen/Innen-Kommunikation gedacht sind.

5. Anordnung nach einem der vorstehenden Ansprüche,
**dadurch gekennzeichnet, daß** das Funkkommunikationssystem zum Übertragen aller Mitteilungen zwischen einer jeweiligen gewöhnlichen Basisstation und einer jeweiligen mobilen Station über die Wiederholungsstation innerhalb einer variablen Zeit oder kontinuierlich beeinflußt werden kann.

6. Anordnung nach einem der vorstehenden Ansprüche,
**dadurch gekennzeichnet, daß** die Mitteilungen, die von der Wiederholungsstation empfangen worden sind, zu einer entsprechenden gesteuerten mobilen Einheit/gewöhnlichen Basisstation innerhalb des gleichen Zeitrahmens, innerhalb welchem sie auf die Wiederholungsstation übertragen worden sind, geleitet werden.

7. Anordnung nach einem der vorstehenden Ansprüche,
**dadurch gekennzeichnet, daß** die Wiederholungsstation in dem Funkkommunikationssystem drahtlos verbunden ist.

## Revendications

1. Système de communications radiophoniques numériques fonctionnant à courte portée, par exemple la norme DECT (télécommunications numériques européennes sans fil), ledit système comprenant des stations de base (1) proches les unes des autres et possédant une station relais (7) pour accroître la portée du système, placée entre une station de base ordinaire (1) et un poste mobile (2), laquelle station relais reçoit un message respectif et envoie le message au poste mobile, ledit système de communications radiophoniques numériques étant conçu pour transmettre le message dans des intervalles de temps (8) qui sont des subdivisions de blocs de temps (9, 10, 11 et 12) moyennant quoi des intervalles de temps sélectionnés dans un bloc de temps respectif sont attribués pour la transmission dudit message à, ou respectivement depuis ladite station relais, **caractérisé en ce que** la station relais est une variante simplifiée d'une station de base, et **en ce que** la station relais est conçue pour influer sur ladite allocation d'intervalles de temps en fonction de la capacité requise dans la zone dans laquelle ladite station relais est située.

2. Appareil selon la revendication 1, **caractérisé en ce que** ladite station relais d'un message est conçue pour fonctionner en accord avec un protocole de multiplexage à répartition dans le temps.

3. Appareil selon l'une quelconque des revendications précédentes, **caractérisé en ce que** les messages dans le système de communications radiophoniques peuvent être transmis depuis une station de base / un poste mobile jusqu'à un poste mobile / une station de base sans que ladite station relais ne soit appelée ou activée.

4. Appareil selon l'une quelconque des revendications précédentes, **caractérisé en ce que** les stations de base et les postes mobiles du système de communications radiophoniques fonctionnent à des fréquences supérieures à 100 MHz et sont destinés à être utilisés pour la communication extérieure / intérieure locale.

5. Appareil selon l'une quelconque des revendications précédentes, **caractérisé en ce que** l'on peut influer , sur le système de communications radiophoniques pour la transmission de tous les messages entre une station de base ordinaire respective et un poste mobile respectif via ladite station relais dans un temps variable ou continuellement.

6. Appareil selon l'une quelconque des revendications précédentes, **caractérisé en ce que** les messages qui sont reçus par ladite station relais sont envoyés à un poste mobile / à une station de base ordinaire respectivement affecté(e) dans le même bloc de temps dans lequel il est transmis à ladite station relais.

7. Appareil selon l'une quelconque des revendications précédentes, **caractérisé en ce que** ladite station relais est reliée sans fil dans ledit système de communications radiophoniques.
